(19) Europäisches Patentamt
European Patent Office
Office européen des brevets

(11) **EP 3 147 309 B1**

(12) **EUROPEAN PATENT SPECIFICATION**

(45) Date of publication and mention of the grant of the patent:
**26.09.2018 Bulletin 2018/39**

(21) Application number: **15796641.7**

(22) Date of filing: **02.04.2015**

(51) Int Cl.:
***C08J 3/07*** *(2006.01)* ***C08J 3/12*** *(2006.01)*
***C08J 3/14*** *(2006.01)*

(86) International application number:
**PCT/JP2015/060455**

(87) International publication number:
**WO 2015/178105 (26.11.2015 Gazette 2015/47)**

(54) **POLYARYLENE SULFIDE DISPERSION, POWDER PARTICLES, METHOD FOR PRODUCING POLYARYLENE SULFIDE DISPERSION, AND METHOD FOR PRODUCING POWDER PARTICLES**

POLYARYLENSULFIDDISPERSION, PULVERTEILCHEN, VERFAHREN ZUR HERSTELLUNG EINER POLYARYLENSULFIDDISPERSION UND VERFAHREN ZUR HERSTELLUNG VON PULVERTEILCHEN

DISPERSION DE SULFURE DE POLYARYLÈNE, PARTICULES DE POUDRE, PROCÉDÉ DE PRODUCTION D'UNE DISPERSION DE SULFURE DE POLYARYLÈNE ET PROCÉDÉ DE PRODUCTION DE PARTICULES DE POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2014 JP 2014106106**

(43) Date of publication of application:
**29.03.2017 Bulletin 2017/13**

(73) Proprietor: **DIC Corporation**
**Tokyo 174-8520 (JP)**

(72) Inventors:
- **ENOMOTO, Yuya**
**Sakura-shi**
**Chiba 285-8668 (JP)**
- **IMAMURA, Shoji**
**Sakura-shi**
**Chiba 285-8668 (JP)**
- **KUWAMURA, Shinichi**
**Tokyo 101-0063 (JP)**

(74) Representative: **TBK**
**Bavariaring 4-6**
**80336 München (DE)**

(56) References cited:
**WO-A1-2009/119466**
**WO-A1-2009/142231**
**JP-A- H02 160 839**
**JP-A- H09 151 342**
**JP-A- H10 273 594**
**JP-A- 2001 234 109**
**JP-A- 2007 154 166**
**JP-A- 2009 173 878**
**JP-A- 2012 177 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 147 309 B1

**Description**

Technical Field

The present invention relates to polyarylene sulfide powder particles coated with an anionic group-containing organic polymer compound, a polyarylene sulfide dispersion including the polyarylene sulfide powder particles, a method for producing the polyarylene sulfide powder particles, and a method for producing the polyarylene sulfide dispersion.

Background Art

A polyarylene sulfide (hereinafter, may be referred to as PAS) resin is excellent in mechanical strength, thermal resistance, chemical resistance, molding workability, and dimensional stability, and therefore, taking advantage of these characteristics, polyarylene sulfide is used for parts of electric·electronic equipment or materials of an automobile part.

Meanwhile, use of the polyarylene sulfide resin has not been expanded because of inferior bondability and adhesion to different materials. Incidentally, in the coating material field, the bonding material field, the coating field, the polymer compound field, or the like, it is expected that fine particles of the polyarylene sulfide or a dispersion liquid of the polyarylene sulfide would be highly demanded, but it is difficult to obtain the fine particles or the dispersion liquid which satisfy the requirement of the adhesion and bondability.

Several means have been suggested as means for obtaining the PAS fine particles and dispersion liquid.

PTL 1 and PTL 3 suggest a production method in which a polyarylene sulfide resin is heated and dissolved in an organic solvent in the presence of an inorganic salt, and then cooled so as to precipitate polyarylene sulfide coarse particles to obtain a suspension, and then a surfactant is added thereto and the resultant is ground to obtain a dispersion liquid of the fine particles.

PTL 2 suggests a dispersion liquid of polyarylene sulfide resin fine particles including a polymeric surfactant, the polyarylene sulfide resin fine particles, and an alcohol-based solvent.

However, the dispersion liquid including the PAS fine particles obtained by such conventional methods has a low concentration in terms of the effective components, and therefore, it is difficult to produce a coating material having a polyarylene sulfide concentration sufficient for forming a coating film, and a desired coating film could not be obtained.

Citation List

Patent Literature

[PTL 1] JP-A-2009-173878
[PTL 2] JP-A-2011-122108
[PTL 3] JP-A-2012-177010

Summary of Invention

Technical Problem

Thus, an object of the present invention is to provide polyarylene sulfide powder particles coated with an anionic group-containing organic polymer compound, which have high dispersion stability even if the polyarylene sulfide resin concentration is high, and which have excellent bondability and adhesion to various base materials such as plastics, metals, and glasses; and a dispersion liquid including the polyarylene sulfide powder particles.

Solution to Problem

As a result of a thorough study in order to solve the aforementioned problem, the present inventors have found that a polyarylene sulfide dispersion including the polyarylene sulfide particles having high stability even at a high concentration can be obtain by coating polyarylene sulfide particles with an anionic group-containing organic polymer compound according to an acid deposition method, thereby completing the present invention.

That is, the present invention relates to the following.

"(1) A polyarylene sulfide dispersion including: polyarylene sulfide particles; an anionic group-containing organic polymer compound, wherein an acid value of the anionic group-containing organic polymer compound is from 10

to 300 mgKOH/g; a base; and an aqueous medium, the polyarylene sulfide particles being coated with the anionic group-containing organic polymer compound.

(2) The polyarylene sulfide dispersion according to (1), in which an anionic group of the anionic group-containing organic polymer compound is at least one anionic group selected from the group consisting of a carboxyl group, a carboxylate group, a sulfonic acid group, a sulfonate group, and a phosphoric acid group.

(3) The polyarylene sulfide dispersion according to (1) or (2), in which a main skeleton of the anionic group-containing organic polymer compound is at least one organic polymer compound selected from the group consisting of a (meth) acrylate resin, a (meth)acrylate-styrene resin, a (meth)acrylate-epoxy resin, a vinyl resin, an urethane resin, and a polyamideimide resin.

(4) The polyarylene sulfide dispersion according to any one of (1) to (3), in which the base is at least one base selected from the group consisting of a metal hydroxide and an organic amine.

(5) The polyarylene sulfide dispersion according to any one of (1) to (4), in which a volume average particle size of the polyarylene sulfide particles in the polyarylene sulfide dispersion is 1 μm or less.

(6) Polyarylene sulfide powder particles obtained by drying the polyarylene sulfide dispersion according to any one of (1) to (5).

(7) A method for producing a polyarylene sulfide dispersion including:

a step (A) of heating polyarylene sulfide in an organic solvent to obtain a solution at a temperature of 150°C or higher [heating and dissolution step];

a step (B) of adding the solution of polyarylene sulfide obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles [crystallization step];

a step (C) of reacting the polyarylene sulfide fine particles obtained in the step (B) with an acid to thereby deposit the anionic group-containing organic polymer compound on the surface of the polyarylene sulfide fine particles and precipitate the polyarylene sulfide particles coated with an anionic group-containing organic polymer [acid deposition step];

a step (D) of filtering the polyarylene sulfide particles coated with the anionic group-containing organic polymer obtained in the step (C), followed by washing, to obtain a hydrous wet cake of the polyarylene sulfide particles coated with an anionic group-containing organic polymer [wet cake preparation step]; and

a step (E) of reacting the hydrous wet cake of the polyarylene sulfide particles coated with an anionic group-containing organic polymer obtained in the step (D) with a base to thereby obtain a dispersion including the polyarylene sulfide particles coated with an anionic group-containing organic polymer compound [dispersion preparation step].

(8) The method for producing a polyarylene sulfide dispersion according to (7), in which the organic solvent used in the step (A) is at least one organic solvent selected from N-methyl-2-pyrrolidone, 1-chloronaphthalene, and 1,3-dimethyl-2-imidazolidinone.

(9) A method for producing polyarylene sulfide powder particles including:

a step (A) of heating polyarylene sulfide in an organic solvent to obtain a solution at a temperature of 150°C or higher [heating and dissolution step];

a step (B) of adding the solution of polyarylene sulfide obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles [crystallization step];

a step (C) of reacting the polyarylene sulfide fine particles obtained in the step (B) with an acid to thereby deposit the anionic group-containing organic polymer compound on the surface of the polyarylene sulfide fine particles and precipitate the polyarylene sulfide particles coated with an anionic group-containing organic polymer [acid deposition step];

a step (D) of filtering the polyarylene sulfide particles coated with the anionic group-containing organic polymer obtained in the step (C), followed by washing, to obtain a hydrous wet cake of polyarylene sulfide particles coated with an anionic group-containing organic polymer [wet cake preparation step]; and

a step (F) of drying the hydrous wet cake of polyarylene sulfide particles coated with the anionic group-containing organic polymer obtained in the step (D) to thereby obtain the polyarylene sulfide powder particles coated with an anionic group-containing organic polymer [powder preparation step].

(10) A method for producing polyarylene sulfide powder particles, including:

a step (A) of heating polyarylene sulfide in an organic solvent to obtain a solution at a temperature of 150°C or higher [heating and dissolution step];

a step (B) of adding the solution of polyarylene sulfide obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles [crystallization step];

a step (C) of reacting the polyarylene sulfide fine particles obtained in the step (B) with an acid to thereby deposit the anionic group-containing organic polymer compound on the surface of the polyarylene sulfide fine particles and precipitate the polyarylene sulfide particles coated with an anionic group-containing organic polymer [acid deposition step];

a step (D) of filtering the polyarylene sulfide particles coated with the anionic group-containing organic polymer obtained in the step (C), followed by washing, to obtain a hydrous wet cake of the polyarylene sulfide particles coated with an anionic group-containing organic polymer [wet cake preparation step];

a step (E) of reacting the hydrous wet cake of the polyarylene sulfide particles coated with the anionic group-containing organic polymer obtained in the step (D) with a base to thereby obtain a dispersion including the polyarylene sulfide particles coated with an anionic group-containing organic polymer compound [dispersion preparation step]; and

a step (F2) of drying the dispersion including the polyarylene sulfide particles coated with an anionic group-containing organic polymer compound obtained in the step (E) to thereby obtain polyarylene sulfide powder particles coated with an anionic group-containing organic polymer [powder preparation step].

(11) The method for producing polyarylene sulfide powder particles according to (9) or (10), in which the organic solvent used in the step (A) is at least one organic solvent selected from N-methyl-2-pyrrolidone, 1-chloronaphthalene, and 1,3-dimethyl-2-imidazolidinone.

(12) The method for producing a polyarylene sulfide dispersion according to (7), in which after the step (B) [crystallization step], a dispersion liquid including the polyarylene sulfide obtained in the step (B) (in the specification, also referred to as a crystallization liquid) is mechanically pulverized [dispersion step].

(13) The method for producing polyarylene sulfide powder particles according to (9) or (10), in which after the step (B) [crystallization step], a dispersion liquid including the polyarylene sulfide obtained in the step (B) is mechanically pulverized [dispersion step].

Advantageous Effects of Invention

According to the present invention, it is possible to provide polyarylene sulfide powder particles coated with an anionic group-containing organic polymer compound, which are stable even if the polyarylene sulfide resin concentration is high, and which have excellent bondability and adhesion to various base materials such as plastics, metals, and glasses; and a dispersion including the polyarylene sulfide powder particles.

Description of Embodiments

Hereinafter, the embodiments of the present invention will be described in detail.

•Polyarylene sulfide resin

A polyarylene sulfide resin used in the present invention has a resin structure in which a structure having an aromatic ring and a sulfur atombonded to each other is used as a repeating unit, and specifically, a structural moiety represented by the following Formula (1) is used as a repeating unit.

[Chem. 1]

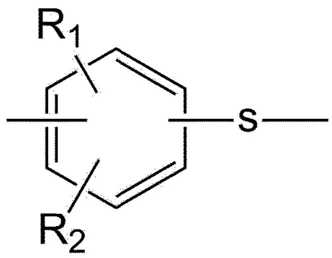

Formula (1)

(In the formula, $R^1$ and $R^2$ each independently represent a hydrogen atom, an alkyl group having 1 to 4 carbon atoms, a nitro group, an amino group, a phenyl group, a methoxy group, and an ethoxy group.)

Here, in the structural moiety represented by Formula (1) shown above, in particular, $R^1$ and $R^2$ in the formula are preferably hydrogen atoms from a viewpoint of mechanical strength of the polyarylene sulfide resin, and in this case, the structural moiety in which bonding is performed at a para position and which is represented by the following Formula (2) is exemplified as a preferred example.

[Chem. 2]

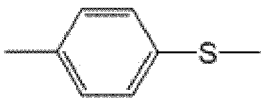

Formula (2)

Among these, in particular, a structure, in which bonding of a sulfur atom to an aromatic ring in the repeating unit is performed at a para position represented by Structural Formula (2) shown above, is preferable from a viewpoint of thermal resistance and crystallinity of the polyarylene sulfide resin. In addition, a structure in which bonding is performed at a para position and a structure in which bonding is performed at a meta position, or a structure in which bonding is performed at a para position and a structure in which bonding is performed at an ortho position may be used in mixture.

In addition, the polyarylene sulfide resin may include not only the structural moiety represented by Formula (1) shown above, but also structural moieties represented by the following Structural Formulas (3) to (6) in the amount of total 30% by mole or less including the structural moiety represented by Formula (1) shown above.

[Chem. 3]

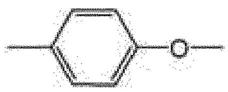

Formula (3)

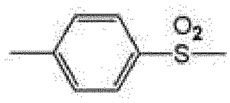

Formula (4)

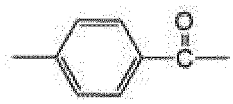

Formula (5)

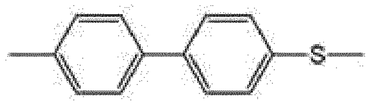

Formula (6)

In particular, in the present invention, the structural moieties represented by Formulas (3) to (6) shown above

are preferably 10% by mole or less from a viewpoint of thermal resistance and mechanical strength of the polyarylene sulfide resin. In a case where the structural moieties represented by Formulas (3) to (6) shown above are included in the polyarylene sulfide resin, a bonding type of the structural moieties may be either a random copolymer or a block copolymer.

In addition, the polyarylene sulfide resin may include a trifunctional structural moiety represented by the following Formula (7) or naphthyl sulfide bonding in a molecular structure thereof.

[Chem. 4]

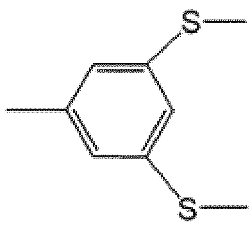

Formula (7)

However, the polyarylene sulfide resin preferably includes a trifunctional structural moiety represented by the following Formula (7) or naphthyl sulfide bonding in the amount of 3% by mole or less and particularly preferably 1% by mole or less with respect to the total molar number including other structural moieties.

A method for producing the polyarylene sulfide resin is not particularly limited, and examples thereof include 1) a method for polymerizing a dihalogenoaromatic compound, a polyhalogenoaromatic compound, and other copolymerization components if necessary in the presence of a sulfur and sodium carbonate, 2) a method for polymerizing a dihalogenoaromatic compound, a polyhalogenoaromatic compound, and other copolymerization components if necessary in a polar solvent in the presence of a sulfidizing agent, and 3) a method for self-condensing p-chlorothiophenol and other copolymerization components if necessary. Among these methods, the method of 2) is generally used and preferable. At the time of a reaction, alkali metal salts such as a carboxylic acid or a sulfonic acid may be added or alkali hydroxides may be added in order to adjust a polymerization degree. Among the aforementioned method of 2), the polyarylene sulfide resin is preferably obtained by a method in which a hydrous sulfidizing agent is introduced into a mixture including a heated organic polar solvent, a dihalogenoaromatic compound, and a polyhalogenoaromatic compound at a rate in which water can be removed from the reaction mixture, the dihalogenoaromatic compound, the polyhalogenoaromatic compound, and the sulfidizing agent in the organic polar solvent are reacted, and the moisture amount within the reaction system is controlled in the range of 0.02 to 0.5 moles with respect to 1 mole of the organic polar solvent, and accordingly the polyarylene sulfide resin is produced (refer to JP-A-07-228699); or a method in which the dihalogenoaromatic compound, the polyhalogenoaromatic compound, alkali metal hydrosulfides, and organic acid alkali metal salts are reacted to each other in the presence of solid alkali metal sulfides and an aprotonic polar organic solvent, while controlling the organic acid alkali metal salts of 0.01 to 0.9 moles with respect to 1 mole of a sulfur source and the moisture amount within the reaction system to the range of 0.02 moles with respect to the 1 mole of aprotonic polar organic solvent (refer to a pamphlet of WO2010/058713). Specific examples of the dihalogenoaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and a compound having an alkyl group having 1 to 18 carbon atoms on an aromatic ring of the aforementioned various compounds as a nucleus substituent. Examples of the polyhalogenoaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. In addition, a halogen atom included in the aforementioned various compounds is preferably a chlorine atom or a bromine atom.

A method for post-treating the reaction mixture including the polyarylene sulfide resin obtained by the polymerization step is not particularly limited, and examples thereof include (1) a method in which, after the polymerization reaction is completed, first, in the reaction mixture as it is, or after an acid or a base is added to the reaction mixture, the solvent is removed by distillation under reduced pressure or ordinary pressure, subsequently, a solid content in which the solvent has been removed by distillation is washed one or two or more times by water, a reaction solvent (or an organic solvent having equivalent solubility to a low molecular polymer), or a solvent such as acetone, methyl ethyl ketone, and alcohols, and the solid content is further neutralized, washed by water, filtered, and dried; (2) a method in which after the polymerization reaction is completed, a solvent such as water, acetone, methyl ethyl ketone, alcohols, ethers, halogenated hydrocarbon, aromatic hydrocarbon, and aliphatic hydrocarbon (a solvent which is soluble in the

used polymerization solvent and a poor solvent at least with respect to polyarylene sulfide) is added to the reaction mixture as a sediment agent to cause a solid product such as polyarylene sulfide and inorganic salts to settle down, and the solid product is filtered, washed, and dried; and (3) a method in which after the polymerization reaction is completed, a reaction solvent (or an organic solvent having equivalent solubility to a low molecular polymer) is added to the reaction mixture and the mixture is stirred, and then a low molecular weight polymer is removed by filtering the mixture, and then the resultant is washed one or more times by a solvent such as water, acetone, methyl ethyl ketone, and alcohols, and then the resultant was neutralized, washed, filtered, and dried.

In addition, in the aforementioned post-treatment method exemplified in the (1) to (3), the polyarylene sulfide resin may be dried in a vacuum or in an inert gas atmosphere such as air or nitrogen.

In addition, the polyarylene sulfide resin can be thermally treated in an oxidizing atmosphere having an oxygen concentration of 5% to 30% by volume or under reduced pressure, and can be oxidized and crosslinked.

In addition, the physical properties of the polyarylene sulfide resin are not particularly limited as long as the properties do not impair the effect of the present invention, and the properties are as follows.

(Melt viscosity)

The melt viscosity (V6) of the polyarylene sulfide resin used in the present invention, which is measured at a temperature of 300°C is preferably in the range of 0.1 to 1000 [Pa·s], from a viewpoint of obtaining an excellent balance between fluidity and mechanical strength, more preferably in the range of 0.1 to 100 [Pa·s] , and particularly preferably in the range of 0.1 to 50 [Pa·s].

(Non-Newtonian index)

The non-Newtonian index of the polyarylene sulfide resin used in the present invention is not particularly limited as long as the index does not impair the effect of the present invention, and is preferably in the range of 0.90 to 2.00. In a case of using a linear polyarylene sulfide resin, the non-Newtonian index is preferably in the range of 0.90 to 1.50 and more preferably in the range of 0.95 to 1.20. Such a polyarylene sulfide resin has excellent mechanical properties, fluidity, and abrasion resistance. However, the non-Newtonian index (N value) is a value obtained by measuring a shear rate and shear stress using capillography under a condition in which the temperature is 300°C and a ratio of an orifice length (L) to an orifice diameter (D) (L/D) is 40, and calculating the shear rate and shear stress using the following equation.
[Equation 1]

$$SR=K\cdot SS^{N} \qquad (II)$$

[However, SR represents a shear rate (second$^{-1}$), SS represents a shear stress (dyne/cm$^2$), and K represents a constant.] As the N value is closer to 1, the PAS has a structure close to linear, and as the N value is higher, the PAS has an advanced branched structure.

One example of the PAS resin which can be used in the present invention is a polyphenylene sulfide resin in the Production Example described below.

[Preparation of PAS dispersion]

Next, the PAS dispersion will be described in detail. The PAS dispersion of the present invention is obtained by the following steps: a step (A) of heating and dissolving the aforementioned PAS resin in a solvent (heating and dissolution step), a step (B) of adding a PAS resin solution to the aqueous solution of an anionic group-containing organic polymer compound prepared in advance to form PAS fine particles (crystallization step), a step (C) of depositing the anionic group-containing organic polymer compound on the surface of the PAS fine particles by an acid to coat the PAS fine particles (acid deposition step), a step of filtering and washing the PAS particles coated with the anionic group-containing organic polymer compound to obtain a hydrous PAS particle wet cake coated with an anionic group-containing organic polymer compound (wet cake preparation step), and the obtained wet cake is neutralized by a base, dispersed again, and adjusted to obtain a PAS dispersion (dispersion preparation step).

[Heating and dissolution step] (Step A)

In order to obtain the PAS dispersion, first, the PAS resin is dissolved in a solvent. An inorganic salt may be added in this step, but may not be added particularly. The shape of the PAS resin which can be used in the present

invention is not particularly limited, but specific examples thereof include powder, granules, a pellet, a fiber, a film, and a molded article. From a viewpoint of obtaining operability and reducing the time required for dissolution, powder, granules, or a pellet is desirable. Among these, in particular, the powdered PAS resin is preferably used. Normally, the dissolution is performed after the PAS resin and a solvent are put into a container, but the order of putting the PAS resin and a solvent into a container is not limited.

A pressure resistant container is preferably used because the container is used under high temperature.

The atmosphere within the container may be either an air atmosphere or an inert gas atmosphere, but an inert gas atmosphere is preferable in order to avoid an atmosphere which causes a reaction with the PAS resin or deteriorates the PAS resin.

Examples of the inert gas used herein include a nitrogen gas, carbon dioxide, a helium gas, an argon gas, a neon gas, a krypton gas, and a xenon gas. A nitrogen gas, an argon gas, or carbon dioxide is desirable in consideration of economic properties and availability, and a nitrogen gas or an argon gas is more preferably used.

The inorganic salt is not particularly limited, and chlorides, bromides, carbonates, and sulfates of alkali metals, alkaline earth metals, and ammonia are used. Specifically, chlorides such as sodium chloride, lithium chloride, potassium chloride, calcium chloride, magnesium chloride, and ammonium chloride; bromides such as sodium bromide, lithium bromide, potassium bromide, calcium bromide, magnesium bromide, and ammonium bromide; carbonates such as sodium carbonate, potassium carbonate, lithium carbonate, calcium carbonate, magnesium carbonate, and ammonium carbonate; and sulfates such as calcium sulfate, sodium sulfate, potassium sulfate, lithium sulfate, magnesium sulfate, and ammonium sulfate are used. The chlorides such as sodium chloride, lithium chloride, potassium chloride, calcium chloride, magnesium chloride, and ammonium chloride are preferable. These may be used alone or two or more thereof may be used in combination.

The weight ratio of the inorganic salt with respect to the PAS resin, in a case where the inorganic salt is added, is in the range of 0.1 to 10 parts by mass and preferably in the range of 0.5 to 5 parts by mass with respect to 1 part by mass of the PAS.

The solvent is not particularly limited as long as the solvent dissolves the PAS resin and examples thereof include at least one solvent selected from a halogen-based solvent such as chloroform, bromoform, methylene chloride, 1,2-dichloroethane, 1,1,1-trichloroethane, chlorobenzene, o-dichlorobenzene, p-dichlorobenzene, 2,6-dichlorotoluene, 1-chloronaphthalene, and hexafluoroisopropanol; an N-alkyl pyrrolidinone-based solvent such as N-methyl-2-pyrrolidinone and N-ethyl-2-pyrrolidinone; an N-alkyl caprolactam-based solvent such as N-methyl-ε-caprolactam and N-ethyl-ε-caprolactam; and a polar solvent such as 1,3-dimethyl-2-imidazolidinone, N,N-dimethyl acetamide, N,N-dimethyl formamide, hexamethyl phosphoric acid triamide, dimethyl sulfoxide, dimethyl sulfone, and tetramethylene sulfone. Preferably, the solvent is at least one solvent selected from N-methyl-2-pyrrolidone, 1-chloronaphthalene, o-dichlorobenzene, and 1,3-dimethyl-2-imidazolidinone. Among these, in particular, N-methyl-2-pyrrolidone, 1-chloronaphthalene, and 1,3-dimethyl-2-imidazolidinone are preferably used in consideration of workability and water solubility.

The weight ratio of the PAS resin with respect to the solvent is not particularly limited as long as the PAS is dissolved in the solvent, and examples of the weight ratio include 0.1 to 20 parts by mass with respect to 100 parts by mass of the solvent. The weight ratio is preferably 0.1 to 10 parts by mass and more preferably 0.1 to 5 parts by mass. The temperature of a reaction liquid mixed for dissolving the PAS resin is increased up to the temperature required for dissolving the PAS resin.

The temperature required for dissolution differs depending on the solvent, and is 150°C or higher, preferably 200°C or higher, and more preferably 250°C or higher. The upper limit is preferably 400°C or lower, which is equal to or lower than the temperature in which the PAS resin is not decomposed. The dissolution is performed under pressure if necessary.

By setting the temperature to the aforementioned temperature, the PAS resin can be dissolved uniformly and the PAS coarse particles can be stably produced.

In addition, the reaction liquid may be stirred or not, and stirring the reaction liquid is preferable and the time required for dissolution can be reduced by stirring.

After the temperature is increased up to a predetermined temperature, the reaction liquid is preferably retained for a while. The retention time is in the range of 10 minutes to 10 hours, preferably in the range of 10 minutes to 6 hours, and more preferably in the range of 20 minutes to 2 hours.

By performing this operation, the PAS resin can be dissolved more sufficiently.

Next, the polyarylene sulfide dispersion of the present invention and polyarylene sulfide powder particles obtained from the dispersion will be described in detail in an order of preparation step, based on the polyarylene sulfide solution obtained above.

[Crystallization step] (Step B)

First, an aqueous solution of an anionic group-containing organic polymer compound is prepared in advance.

As an anionic group in the anionic group-containing organic polymer compound used herein, for example, a carboxyl group, a carboxylate group, a sulfonic acid group, a sulfonate group, or a phosphoric acid group can be used, and among these, use of the carboxylate group or the sulfonate group, in which a carboxyl group or a sulfonic acid group is partially or entirely neutralized by a basic compound, is preferable from a viewpoint of obtaining satisfactory water dispersion stability.

In addition, the main skeleton of the anionic group-containing organic polymer compound is a (meth) acrylate resin, a (meth)acrylate-styrene resin, a (meth)acrylate-epoxy resin, a vinyl resin, a urethane resin, or a polyamideimide resin. Also, the anionic group-containing organic polymer compound used in the present invention may be used alone or one or more anionic group-containing organic polymer compounds may be used in mixture. If the compound is dissolved in a basic state, the compound can be used in the PAS dispersion and the PAS powder particles of the present invention.

The anionic group-containing polymer compound is completely dissolved in a basic aqueous solution. Preferred examples of the base used herein include ammonia, inorganic metal hydroxides such as lithium hydroxide, sodium hydroxide, and potassium hydroxide, and organic amines such as alkylamines including methylamine, ethylamine, n-butylamine, dimethylamine, diethylamine, trimethylamine, triethylamine, and tri-n-butylamine; hydroxylamines including N-methyl aminoethanol, N,N-dimethyl aminoethanol, N,N-diethyl aminoethanol, 2-amino-2-methyl propanol, diethanolamine, and triethanolamine; and polyamines including ethylene diamine and diethylene triamine. These may be used alone or two or more thereof may be used in combination. In addition, the amount of the base for dissolving the anionic group-containing organic polymer compound is more preferably 70% to 300% with respect to the acid value of the anionic group-containing organic polymer compound, in order to completely dissolve the resin.

In addition, the anionic group-containing organic polymer compound having an acid value of 10 to 300 mgKOH/g is used. If the anionic group-containing organic polymer compound having an acid value lower than the aforementioned range is used, dispersion stability is insufficient, which is not preferable. Use of the anionic group-containing organic polymer compound having an acid value of 50 to 240 mgKOH/g is preferable since the dispersion stability increases the most.

Furthermore, in the present invention, even if a part or the entire surfaces of the PAS particles is coated with the anionic group-containing organic polymer compound, an effect of dispersion stability is obtained. Thus, the anionic group-containing organic polymer compound is preferably used in the amount of 1 part by mass to 200 parts by mass with respect to 100 parts by mass of the PAS. Among these, the use of the anionic group-containing organic polymer compound in the amount of 5 parts by mass to 150 parts by mass is preferable since the dispersion stability increases the most.

Next, by pouring the prepared PAS solution into the prepared aqueous solution of an anionic group-containing organic polymer compound, a PAS dispersion liquid (crystallization liquid) can be obtained. At this time, the PAS dispersion liquid is different from the "dispersion of the polyarylene sulfide particles coated with the anionic group-containing organic polymer compound", which is the target of the present invention. The state of the PAS particles in this crystallization step is described as below.

The prepared aqueous solution of an anionic group-containing organic polymer compound forms a water flow on being stirred at a high speed by a stirrer such as a stirring blade. The flow may be either a turbulent flow or a laminar flow, and the higher peripheral speed is preferable since the size of the crystallized particles can be small.

As the speed of pouring the PAS solution is lower, the particles can be formed in a small size, which is preferable. As a pouring method, a method is exemplified, in which the PAS solution is directly poured into a solution obtained by strongly stirring the prepared anionic group-containing organic polymer compound solution. Here, the anionic group-containing organic polymer compound solution is preferably stirred in a strong manner in order to form the PAS particles in a small size.

In addition, the PAS dispersion liquid (crystallization liquid) to which the PAS solution has been poured can be subjected to a dispersion step (dispersion step) by conducting mechanical pulverization. Due to the above, more satisfactory dispersion stability can be retained. Here, for the mechanical pulverization, a method of using apparatuses described in the following section of mechanical pulverization apparatus is exemplified.

It is considered that the state of the PAS particles in this crystallization step is that the anionic group-containing organic polymer compound exists on the surface of the PAS resin particles but is not fixed strongly. It is assumed that the above is because the acidic group at the terminal of the anionic group-containing organic polymer compound is ionically bonded to alkali metals, and accordingly the polymer compound flexibly exists on the surface of the PAS particles. A salt exchange reaction of the functional group of the anionic group-containing organic polymer compound is caused by the acid in the following acid deposition step and the polymer compound is fixed to the PAS surface.

[Acid deposition step] (Step C)

In this step, the water-soluble resin obtained in the aforementioned step causes the PAS resin particles existing

on the surface to be acid-deposited by an acid, and a slurry in which the PAS resin particles coated with the anionic group-containing organic polymer compound are precipitated is produced.

Examples of the acid used in the acid deposition include a hydrochloric acid, a sulfuric acid, an acetic acid, and a nitric acid, and among these, a hydrochloric acid is preferable.

The acid concentration depends on the various anionic group-containing organic polymer compounds and the various PAS resins, the acid concentration needs to be set depending on the number of substituents at the terminal of the anionic group-containing organic polymer compound, and pH within the system is adjusted to 2 to 5 by an acid.

[Wet cake preparation step] (Step D)

In this step, from the slurry in which the PAS resin particles coated with the anionic group-containing polymer compound obtained in the aforementioned acid deposition step are precipitated, the PAS resin particles coated with the anionic group-containing polymer compound are filtered to obtain a wet cake. The filtration method is not limited as long as the particles can be separated from a liquid, such as filtration and centrifugation. The moisture amount in the filtered wet cake is preferably in the range of 15% to 55%, if the moisture amount is too low, the wet cake is unlikely to be loosened in the re-dispersion of the following step and the re-dispersibility is deteriorated, and accordingly the moisture amount is preferably 20% to 45%. The wet cake is washed by ion exchanged water, distilled water, pure water, or tap water in order to remove the undeposited resin or the remaining organic solvent. The washing method may be either filtration washing by pouring a washing solvent from the top of the wet cake or washing by peptizing the wet cake in a washing solvent again.

[Dispersion preparation step] (Step E)

The wet cake obtained in the aforementioned wet cake preparation step is peptized in water by a bead mill or an ultrasonic disperser, and the pH is adjusted to 6 to 10 using an inorganic base or an organic base to obtain the PAS dispersion. The nonvolatile component in the dispersion obtained herein is 15% to 40%, and since the nonvolatile component in the conventional PAS dispersion is about 5% to 10%, it is understood that the PAS dispersion in a remarkably high concentration is obtained in the present invention.

[Preparation of PAS powder particles] (Step F1 and Step F2)

Furthermore, the PAS powder particles of the present invention are PAS powder particles coated with the anionic group-containing organic polymer compound which are obtained by removing moisture from the wet cake obtained in the aforementioned step D or the PAS dispersion obtained in the step E and then drying. After drying, the resultant can be used by being pulverized by various pulverization apparatuses to adjust to a desired particle size.

A PAS coarse particle suspension in which the aforementioned PAS coarse particles are dispersed is mechanically pulverized until the volume average particle size becomes 1 μm or less in the measurement method described below. Preferably, the suspension is mechanically pulverized until that the volume average particle size becomes less than 500 nm.

[Mechanical pulverization apparatus]

Examples of the mechanical pulverization apparatus include commercially available mechanical pulverization apparatuses. In particular, as a preferred mechanical pulverization apparatus which effectively disperses and pulverizes the PAS coarse particles to produce a dispersion liquid of PAS fine particles having a small particle size, a ball mill, a bead mill, a sand mill, a colloidal mill, a disper dispersing stirring device, and a wet atomization apparatus (for example, Ultimizer manufactured by SUGINO MACHINE LIMITED, an ultrasonic disperser manufactured by Hielscher) can be exemplified. Among these, an apparatus selected from the ball mill, the bead mill, the sand mill, and the wet atomization apparatus is preferable. As the power of pulverization at the time of mechanical pulverization is greater and the pulverization time is longer, the volume average particle size of the obtained fine particles becomes smaller. However, the volume average particle size becomes excessively smaller, aggregation is likely to occur and accordingly the particle size is controlled to an appropriate range. For example, the particle size can be controlled by selecting a bead size or a bead amount and adjusting a peripheral speed in the bead mill.

The PAS fine particle dispersion liquid may include a precipitate. At that time, the dispersion liquid may be used by separating a precipitation portion and a dispersion portion. In a case where the dispersion liquid is only obtained, the precipitation portion and the dispersion portion may be separated, and in order for the separation, decantation or filtration may be performed. In addition, in a case where particles having an even smaller particle size are necessary, centrifugation may be performed to cause the particles having a large particle size to settle down and decantation or filtration may be

performed to remove the precipitation portion.

Normally, even if the PAS fine particle dispersion liquid obtained in the present invention is left to stand for 24 hours, the fine particles and the aqueous solution of an anionic group-containing organic polymer compound are not separated.

The PAS fine particle dispersion liquid obtained in the above way is a useful additive in the field of a coating material, bonding, and a polymer compound because of the properties of the dispersion liquid.

[Examples]

Hereinafter, the present invention is described in detail using Examples. However, the present invention is not limited to these Examples.

[Preparation of PAS resin]

The method for producing a PAS resin used in the present specification will be described in the following as Production Examples.

(Production Example 1) Production of polyarylene sulfide resin (hereinafter, referred to as PAS-1)

14.148 kg of 45% sodium hydrosulfide (47.55% by weight NaSH), 9.541 kg of 48% caustic soda (48.8% by weight NaOH), and 38.0 kg of N-methyl-2-pyrrolidone (hereinafter, may be abbreviated as NMP) were put into a 150 L autoclave equipped with a pressure gauge, a thermometer, and a stirring blade with a capacitor connected thereto, and a bottom valve. The temperature of the autoclave was increased up to 209°C while stirring under a nitrogen gas stream to distill away 12.150 kg of water (the remaining moisture amount is 1.13 moles per 1 mole of NaSH). Thereafter, the autoclave was tightly sealed and the contents were cooled down to 180°C, and 17.874 kg of p-dichlorobenzene (hereinafter, abbreviated as "p-DCB") and 16.0 kg of NMP were put into the autoclave. The autoclave was pressurized to 0.1 MPa of a gauge pressure using a nitrogen gas at a solution temperature of 150°C to start an increase in temperature. At the time when the temperature became 260°C by the increase, a reaction was performed at 260°C for 2 hours, while cooling the autoclave by spraying water on the upper portion of the autoclave. During the cooling of the upper portion of the autoclave, the temperature was retained constantly such that the solution temperature is not decreased. Next, the temperature was decreased, and the cooling of the upper portion of the autoclave was stopped. The highest pressure during the reaction was 0.87 MPa. After the reaction, the autoclave was cooled, the bottom valve was open at a temperature of 100°C, and a reaction slurry was moved to a 150 L plate filter to be pressurized and filtered at a temperature of 120°C. 50 kg of warm water having a temperature of 70°C was added to the obtained cake and the mixture was stirred, and then filtered, and further 25 kg of warm water was added to the residue, and the mixture was filtered. Next, 25 kg of warm water was added to the residue and the mixture was stirred for 1 hour and filtered, and then an operation of adding 25 kg of warm water to the residue and filtering the mixture was repeated twice. The obtained cake was dried at a temperature of 120°C for 15 hours using a hot air circulation-type drier to obtain PAS-1. The melt viscosity of the obtained PAS-1 was 10 Pa·s.

(Production Example 2) Production of polyarylene sulfide resin (hereinafter, referred to as PAS-2)

14.148 kg of 45% sodium hydrosulfide (47.55% by weight NaSH), 9.541 kg of 48% caustic soda (48.8% by weight NaOH), and 38.0 kg of NMP were put into a 150 L autoclave equipped with a pressure gauge, a thermometer, and a stirring blade with a capacitor connected thereto, and a bottom valve. The temperature of the autoclave was increased up to 209°C while stirring under a nitrogen gas stream to distill away 12.150 kg of water (the remaining moisture amount is 1.13 moles per 1 mole of NaSH). Thereafter, the autoclave was tightly sealed and the contents were cooled down to 180°C, and 18.366 kg of p-DCB and 16.0 kg of NMP were put into the autoclave. The autoclave was pressurized to 0.1 MPa of a gauge pressure using a nitrogen gas at a solution temperature of 150°C to start an increase in temperature. At the time when the temperature became 260°C by the increase, a reaction was performed at 260°C for 2 hours, while cooling the autoclave by spraying water on the upper portion of the autoclave. During the cooling of the upper portion of the autoclave, the temperature was retained constantly such that the solution temperature is not decreased. Next, the temperature was decreased, and the cooling of the upper portion of the autoclave was stopped. The highest pressure during the reaction was 0.87 MPa. After the reaction, the autoclave was cooled, the bottom valve was open at a temperature of 100°C, and a reaction slurry was moved to a 150 L plate filter to be pressurized and filtered at a temperature of 120°C. 50 kg of warm water having a temperature of 70°C was added to the obtained cake and the mixture was stirred, and then filtered, and further 25 kg of warm water was added to the residue to filter the mixture. Next, 25 kg of warm water was added to the residue and the mixture was stirred for 1 hour and filtered, and then an operation of adding

25 kg of warm water to the residue and filtering the mixture was repeated twice. The obtained cake was dried at a temperature of 120°C for 15 hours using a hot air circulation-type drier to obtain PAS-2. The melt viscosity of the obtained PAS-2 was 2.5 Pa·s.

(Production Example 3) Production of polyarylene sulfide resin (hereinafter, referred to as PAS-3)

14.148 kg of 45% sodium hydrosulfide (47.55% by weight NaSH), 9.541 kg of 48% caustic soda (48.8% by weight NaOH), and 38.0 kg of NMP were put into a 150 L autoclave equipped with a pressure gauge, a thermometer, and a stirring blade with a capacitor connected thereto, and a bottom valve. The temperature of the autoclave was increased up to 209°C while stirring under a nitrogen gas stream to distill away 12.150 kg of water (the remaining moisture amount is 1.13 moles per 1 mole of NaSH). Thereafter, the autoclave was tightly sealed and the contents were cooled down to 180°C, and 17.464 kg of p-DCB and 16.0 kg of NMP were put into the autoclave. The autoclave was pressurized to 0.1 MPa of a gauge pressure using a nitrogen gas at a solution temperature of 150°C to start an increase in temperature. At the time when the temperature became 260°C by the increase, a reaction was performed at 260°C for 2 hours, while cooling the autoclave by spraying water on the upper portion of the autoclave. During the cooling of the upper portion of the autoclave, the temperature was retained constantly such that the solution temperature is not decreased. Next, the temperature was decreased, and the cooling of the upper portion of the autoclave was stopped. The highest pressure during the reaction was 0.87 MPa. After the reaction, the autoclave was cooled, the bottom valve was open at a temperature of 100°C, and a reaction slurry was moved to a 150 L plate filter to be pressurized and filtered at a temperature of 120°C. 50 kg of warm water having a temperature of 70°C was added to the obtained cake and the mixture was stirred, and then filtered, and further 25 kg of warm water was added to the residue to filter the mixture. Next, 25 kg of warm water was added to the residue and the mixture was stirred for 1 hour and filtered, and then an operation of adding 25 kg of warm water to the residue and filtering the mixture was repeated twice. The obtained cake was dried at a temperature of 120°C for 15 hours using a hot air circulation-type drier to obtain PAS-3. The melt viscosity of the obtained PAS-3 was 52 Pa·s.

(Production Example 4) Production of polyarylene sulfide resin (PAS-4)

19.222 kg of flaked $Na_2S$ (60.9% by mass) and 45.0 kg of NMP were put into a 150 L autoclave equipped with a pressure gauge, a thermometer, and a stirring blade with a capacitor connected thereto, and a bottom valve. The temperature of the autoclave was increased up to 204°C while stirring under a nitrogen gas stream to distill away 4.438 kg of water (the remaining moisture amount is 1.14 moles per 1 mole of $Na_2S$). Thereafter, the autoclave was tightly sealed and the contents were cooled down to 180°C, and 20.442 kg of p-DCB, 5.111 kg of m-dichlorobenzene (hereinafter, abbreviated as "m-DCB") (15% by mole with respect to the total amount of m-DCB and p-DCB), and 18.0 kg of NMP were put into the autoclave. The autoclave was pressurized to 1 kg/$cm^2$ G using a nitrogen gas at a solution temperature of 150°C to start an increase in temperature. The autoclave was cooled by flowing out a cooling medium of 80°C to a coil wound outside of the upper portion of the autoclave, while stirring the autoclave at a solution temperature of 220°C for 3 hours. Thereafter, the temperature of the autoclave was increased and stirred at a solution temperature of 260°C for 3 hours, and subsequently, the temperature was decreased and the cooling of the upper portion of the autoclave was stopped. During the cooling of the upper portion of the autoclave, the temperature was retained constantly such that the solution temperature is not decreased. The highest pressure during the reaction was 8.91 kg/$cm^2$ G.

A filtering and washing the obtained slurry with warm water were repeated twice according to the common method, and thus, a filter cake including about 50% by mass of water was obtained. Next, 60 kg of water and 100 g of acetic acid were added to this filter cake to make a slurry again, and the slurry was stirred at a temperature of 50°C for 30 minutes and then filtered again. At this time, the pH of the slurry was 4.6. An operation of adding 60 kg of water to the obtained filter cake and stirring 30 minutes and then filtering the resultant was repeated 5 times. Thereafter, the obtained filter cake was dried at a temperature of 120°C for 4.5 hours using a hot air circulation-type drier to obtain a white powdered parameter polyarylene sulfide copolymer resin (hereinafter, referred to as PAS-4). The obtained PAS-4 was a linear type and had a melting point of 230°C and V6 melt viscosity of 2.1 [Pa·s].

(Production Example 5) Production of polyarylene sulfide resin (PAS-5)

19.222 kg of flaked $Na_2S$ (60.9% by mass) and 45.0 kg of NMP were put into a 150 L autoclave. The temperature of the autoclave was increased up to 204°C while stirring under a nitrogen gas stream to distill away 4.438 kg of water (the remaining moisture amount is 1.14 moles per 1 mole of $Na_2S$). Thereafter, the autoclave was tightly sealed and the contents were cooled down to 180°C, and 22.999 kg of p-DCB, 2.555 kg of m-DCB (15% by mole with respect to the total amount of m-DCB and p-DCB), and 18.0 kg of NMP were put into the autoclave. The autoclave was pressurized to 1 kg/$cm^2$ G using a nitrogen gas at a solution temperature of 150°C to start an increase in temperature. The autoclave

was cooled by flowing out a cooling medium of 80°C to a coil wound outside of the upper portion of the autoclave, while stirring the autoclave at a solution temperature of 220°C for 3 hours. Thereafter, the temperature of the autoclave was increased and stirred at a solution temperature of 260°C for 3 hours, and subsequently, the temperature was decreased and the cooling of the upper portion of the autoclave was stopped. During the cooling of the upper portion of the autoclave, the temperature was retained constantly such that the solution temperature is not decreased. The highest pressure during the reaction was 8.91 $kg/cm^2$ G.

A filtering and washing the obtained slurry with warm water were repeated twice according to the common method and a filter cake including about 50% by mass of water was obtained. Next, 60 kg of water and 100 g of acetic acid were added to this filter cake to be a slurry again, and the slurry was stirred at a temperature of 50°C for 30 minutes and then filtered again. At this time, the pH of the slurry was 4.6. An operation of adding 60 kg of water to the obtained filter cake and stirring 30 minutes and then filtering the resultant again was repeated 5 times. Thereafter, the obtained filter cake was dried at a temperature of 120°C for 4.5 hours using a hot air circulation-type drier to obtain a white powdered parameter polyarylene sulfide copolymer resin (hereinafter, referred to as PAS-5). The obtained PAS-5 was a linear type and had a melting point of 230°C and V6 melt viscosity of 8.5 [Pa·s].

[Production of anionic group-containing organic polymer compound]

One example of the method for producing an anionic group-containing organic polymer compound used in the present specification will be described below.

(Production Example 6) Production of anionic group-containing organic polymer compound (R-1)

720 parts of 2-propanol (hereinafter, referred to as IPA) as a polymerization solvent was put into a reactor vessel of an automatic polymerization reaction apparatus (polymerization tester model DSL-2AS, manufactured by Todoroki Co.) including the reactor vessel equipped with a stirring device, a dipping device, a temperature sensor, and a reflux device with a nitrogen supply device on the upper portion, and the inside of the reactor vessel was substituted with nitrogen while stirring. After the temperature of the inside of the reactor vessel was increased to 80°C while retaining the inside of the reactor vessel with nitrogen atmosphere, a mixture of 120 parts of benzyl methacrylate, 49.8 parts of 2-hydroxyethyl methacrylate, 153.72 parts of methacrylic acid, 180 parts of styrene, 0.6 parts of glycidyl methacrylate, 34.62 parts of n-butyl methacrylate, 60.66parts of butyl acrylate, 0.6 parts of methyl methacrylate, 48 parts of "perbutyl (registered trademark) O" (effective component peroxy 2-ethyl hexanoic acid t-butyl, manufactured by NOF CORPORATION), and 24 parts of thioglycerol was added dropwise for 4 hours by a dripping device. After the dripping is completed, a reaction was continued for 15 hours at the same temperature, and then the concentration of a resin fraction was adjusted to 45%, thereby obtaining an IPA solution of a styrene(meth)acrylic copolymer (R-1), which is an anionic group-containing polymer compound having an actually measured acid value of 157 mgKOH/g

(Production Example 7) Production of anionic group-containing organic polymer compound (R-2)

According to the same prescription as Production Example 6 except that the polymerization solvent of the anionic group-containing polymer compound (R-1) obtained in Production Example 6 was changed to 720 parts of methyl ethyl ketone (MEK), 118.2 parts of benzyl methacrylate, 96 parts of 2-hydroxyethyl methacrylate, 6.6 parts of methacrylic acid, 30 parts of styrene, 0.6 parts of glycidyl methacrylate, 180 parts of n-butyl methacrylate, 168 parts of butyl acrylate, and 0.6 parts of methyl methacrylate, a MEK solution of a styrene(meth)acrylic copolymer (R-2), which is an anionic group-containing organic polymer compound having the concentration of a resin fraction of 45% and an actually measured acid value of 5.3 mgKOH/g.

(Production Example 8) Production of anionic group-containing organic polymer compound (R-3)

1086 g of PGMAc (propylene glycol monomethyl ether acetate), 587.3 g (0.80 moles) of IPDI3N (isocyanurate type triisocyanate synthesized from isophorone diisocyanate: NCO%=17.2), and 499.1 g (2.52 moles) of cyclohexanone-1,3,4-tricarboxylic acid-3,4-anhydride were added to a flask equipped with a stirring device, a thermometer, and a capacitor and the temperature was increased up to 140°C. The reaction was undergone with foaming. The reaction was performed at this temperature for 8 hours. The inside of the system became a light yellow liquid, and as a result of measuring characteristic absorption by an infrared spectrum, 2270cm-1 which is characteristic absorption of an isocyanate group completely disappeared, and absorption of an imide group was confirmed at $1780cm^{-1}$ and $1720cm^{-1}$. The acid value was 212 mgKOH/g in terms of a solid content, and the number average molecular weight was 4700 in terms of polystyrene. The concentration of an acid anhydride group was 1.14 mmol/g in terms of a solid content. In addition, the concentration of a resin fraction was 47.4% by mass. This resin solution is abbreviated as an imide resin solution.

Continuously, 96.3 g (1.3 moles) of n-butanol was added to the obtained imide resin solution to react at a temperature of 120°C for 2 hours. As a result of measuring characteristic absorption by an infrared spectrum, mass absorption of 1860cm$^{-1}$, which is characteristic absorption of the acid anhydride group was completely lost. The acid value was 148 mgKOH/g in terms of a solid content, and the number average molecular weight was 4800 in terms of polystyrene. In addition, the concentration of the resin fraction was 49.2% by mass. This resin solution is an anionic group-containing organic polymer compound (alcohol modified polyamideimide resin (abbreviated as R-3)).

Next, a method for measuring particle size distribution and settleability of the polyarylene sulfide dispersion liquid obtained in Examples and Comparative Examples described below will be described.

[Measurement of particle size distribution]

The volume average particle size of the obtained polyarylene sulfide dispersion liquid was measured by using "UPA-150" (Laser Doppler particle size distribution meter manufactured by NIKKISO CO., LTD.)

[Visual confirmation of sedimentation]

A supernatant when the obtained polyarylene sulfide dispersion liquid was left to stand for 24 hours was confirmed. The case where the supernatant is transparent was rated as "sedimentation is observed", and the case where the supernatant is not confirmed is rated as "no sedimentation is observed".

(Example 1)

·Step (A) [Dissolution step]

10 g of the PAS-1 produced in the Production Example 1 and 490 g of NMP were put into an autoclave [1] with an openable valve in the lower portion. The temperature of the inside of the system was increased up to 250°C under pressure while passing nitrogen through the system and stirring, and then the system was stirred for 30 minutes.

·Step (B) [Crystallization step]

An aqueous solution of the anionic group-containing organic polymer compound obtained by mixing the 2.22 g of the R-1 produced in Production Example 6, a 0.66 g of 25% KOH aqueous solution and 2,400 g of water was previously put in an autoclave [2] connected to the openable valve of the autoclave used in the step (A) with a valve. An NMP solution of the PAS dissolved in the step (A) was made to flow into the autoclave [2] by opening the valve of the autoclave [1] so as to obtain a crystallization liquid within the autoclave [2]. An operation of causing the NMP solution of the PAS to flow in to the aqueous solution of the anionic group-containing organic polymer compound was repeated 12 times to obtain the crystallization liquid. From the 34.8 kg of the crystallization liquid, an undissolved residue was removed using a metal mesh having an aperture of 45 μm (pH of the obtained crystallization liquid was 8.0).

·Step (C) [Acid deposition step]

By adding 230.9 g of a 2% hydrochloric acid dropwise to the crystallization liquid obtained in the step (B), an acid-deposited slurry in which the PAS fine particles are aggregated was obtained, and the surface of the particles is coated with an anionic group-containing organic polymer compound (pH of the obtained liquid was 2.7).

·Step (D) [Wet cake preparation step]

An aqueous medium was removed from the acid-deposited slurry obtained in the step (C) by filtration with suction, and the collected residues was washed by ion exchanged water until the electric conductivity of the filtrate for the collected residues becomes 0.5 mS/cm or less, so as to obtain 391.5 g of a hydrous wet cake of the PAS particles coated with an anionic group-containing organic polymer compound having a nonvolatile component of 29.8%.

•Step (E) [Fine particle dispersion preparation step]

150 g of the hydrous wet cake of the PAS particles coated with an anionic group-containing organic polymer compound obtained in the step (D) and 1.88 g of 50% dimethyl aminoethanol aqueous solution were put into a 300 cc stainless cup, an ultrasonic wave was radiated for 30 minutes using an ultrasonic disperser UP200ST (output of 200 W and frequency of 24 kHz) manufactured by Hielscher, and the contents were adjusted using ion exchanged water so as

to have a nonvolatile component of 25%, thereby obtaining a PAS fine particle dispersion (D-1). The volume average particle size of the obtained dispersion was 100.2 nm. In addition, according to visual confirmation of the sedimentation caused by being left to stand for 24 hours, "no sedimentation is observed".

(Example 2)

A PAS fine particle dispersion (D-2) having a nonvolatile component of 25% was obtained in the same manner as in the step (A) to the step (E) of Example 1, except that the PAS-2 was used instead of the PAS-1 as the polyarylene sulfide used in the step (A) of Example 1. The volume average particle size of the obtained dispersion was 114.1 nm. In addition, according to visual confirmation of the sedimentation caused by being left to stand for 24 hours, "no sedimentation is observed".

(Example 3)

A PAS fine particle dispersion (D-3) having a nonvolatile component of 25% was obtained in the same manner as in the step (A) to the step (E) of Example 1, except that the PAS-3 was used instead of the PAS-1 as the polyarylene sulfide used in the step (A) of Example 1. The volume average particle size of the obtained dispersion was 140.2 nm. In addition, according to visual confirmation of the sedimentation caused by being left to stand for 24 hours, "no sedimentation is observed".

(Example 4)

A PAS fine particle dispersion (D-4) having a nonvolatile component of 25% was obtained in the same manner as in the step (A) to the step (E) of Example 1, except that the PAS-4 was used instead of the PAS-1 as the polyarylene sulfide used in the step (A) of Example 1. The volume average particle size of the obtained dispersion was 138.0 nm. In addition, according to visual confirmation of the sedimentation caused by being left to stand for 24 hours, "no sedimentation is observed".

(Example 5)

A PAS fine particle dispersion (D-5) having a nonvolatile component of 25% was obtained in the same manner as in the step (A) to the step (E) of Example 1, except that the PAS-5 was used instead of the PAS-1 as the polyarylene sulfide used in the step (A) of Example 1. The volume average particle size of the obtained dispersion was 125.7 nm. In addition, according to visual confirmation of the sedimentation caused by being left to stand for 24 hours, "no sedimentation is observed".

(Example 6)

A PAS fine particle dispersion (D-6) having a nonvolatile component of 25% was obtained in the same manner as in the step (A) to the step (E) of Example 1, except that NMP used in the step (A) of Example 1 was used instead of 1-chloronaphthalene and the dissolution was performed by heating at a temperature of 230°C. The volume average particle size of the obtained dispersion was 120.5 nm. In addition, according to visual confirmation of the sedimentation caused by being left to stand for 24 hours, "no sedimentation is observed".

(Example 7)

A PAS fine particle dispersion (D-7) having a nonvolatile component of 25% was obtained in the same manner as in the step (A) to the step (E) of Example 1, except that the R-3 (2.03 g) was used instead of the R-1 as the anionic group-containing organic polymer compound used in the step (B) in Example 1, and the aqueous solution of the anionic group-containing organic polymer compound was produced by changing the amount of 25% KOH to 0.59 g. The volume average particle size of the obtained dispersion was 90.3 nm. In addition, according to visual confirmation of the sedimentation caused by being left to stand for 24 hours, "no sedimentation is observed".

(Example 8)

A PAS fine particle dispersion (D-8) having a nonvolatile component of 25% was obtained in the same manner as in the step (A) to the step (E) of Example 1, except that 1.0 g of the anionic group-containing organic polymer compound JONCRYL 683 (an acid value of 160 mgKOH/g) manufactured by BASF SE. was used instead of the R-1 as the anionic

group-containing organic polymer compound used in the step (B) in Example 1, and the aqueous solution of the anionic group-containing organic polymer compound was produced by changing the amount of 25% KOH to 0.64g. The volume average particle size of the obtained dispersion was 118.3 nm. In addition, according to visual confirmation of the sedimentation caused by being left to stand for 24 hours, "no sedimentation is observed".

(Example 9)

A PAS fine particle dispersion (D-9) having a nonvolatile component of 25% was obtained in the same manner as in the step (A) to the step (E) of Example 1, except that a step of irradiating the crystallization liquid obtained in the step (B) with an ultrasonic wave for 30 minutes using an ultrasonic disperser UP200ST (output of 200 W and frequency of 24 kHz) manufactured by Hielscher, was added. The volume average particle size of the obtained dispersion was 125.6 nm. In addition, according to visual confirmation of the sedimentation caused by being left to stand for 24 hours, "no sedimentation is observed".

(Example 10)

100 g of the hydrous PAS particle wet cake coated with an anionic group-containing organic polymer compound having a nonvolatile component of 29.8% obtained in the step (D) of Example 1 was dried at a temperature of 40°C for 12 hours under reduced pressure using a vacuum drier, and then pulverized using a juicer mixer so as to obtain 25.3 g of PAS powder particles coated with an anionic group-containing organic polymer compound.

(Comparative Example 1)

A PAS slurry (D-10) having a nonvolatile component of 25% was obtained in the same manner as in the step (A) to the step (E) of Example 1 except that the dissolution temperature of 280°C in the step (A) of Example 1 was changed to 30°C. The volume average particle size of the obtained slurry was 3319.3 nm. In addition, according to visual confirmation of the sedimentation caused by being left to stand for 24 hours, "sedimentation is observed", and separation of a solid and liquid was confirmed.

(Comparative Example 2)

The same operation as the step (A) to the step (C) of Example 1 was carried out except that R-2 (2.22 g) was used instead of R-1 as the anionic group-containing organic polymer compound used in the step (B) of Example 1 and the amount of 25% KOH was changed to 0.02 g to produce an aqueous solution of the anionic group-containing organic polymer compound, but an acid deposition was not performed and the PAS wet cake coated with an anionic group-containing organic polymer compound could not be produced (unable to produce a PAS fine particle dispersion).

(Comparative Example 3)

The same operation as the step (A) to the step (C) of Example 1 was carried out except that the PAS fine particles were deposited only using ion exchanged water without using the anionic group-containing organic polymer compound used in the step (B) of Example 1, but an acid deposition was not performed and the PAS wet cake coated with an anionic group-containing organic polymer compound could not be produced (unable to produce a PAS fine particle dispersion).

As understood from Examples 1 to 9 and Comparative Examples 1 to 3, dispersibility of the polyarylene sulfide fine particle dispersion obtained according to the present invention is satisfactory.

[Confirmation test of compatibility with other resins]

(Example 11)

1 g of the dispersion liquid obtained in Example 1 and 4 g of an aqueous epoxy ester resin EFD-5570 manufactured by DIC Corporation were mixed to each other and applied to a glass plate as a base material using an applicator. Thereafter, the plate was baked for 1 hour in an oven of a temperature of 200°C to obtain a film (thickness of 152 μm) . The glass plate with the obtained film attached thereto was cut into a 5 cm x 5 cm square and a haze measurement was performed using a turbidity meter (ND-1001DP manufactured by NIPPON DENSHOKU INDUSTRIES Co., LTD.). The haze value was 22.

(Comparative Example 4)

A glass plate with a coating film (thickness of 149 μm) attached thereto was obtained in the same manner as in Example 11, by mixing 1 g of the dispersion liquid obtained in Comparative Example 1 and 4 g of an aqueous epoxy ester resin EFD-5570 manufactured by DIC Corporation and using an applicator, and a haze measurement was performed. The haze value was 86.

As understood from the coating state of Example 11 and Comparative Example 4, compatibility of the PAS fine particles obtained according to the present invention with other resins is satisfactory.

[Adhesion test of coating film]

(Example 12)

The coating film on the glass plate obtained in Example 11 was measured based on a cross-cut test method of JIS K-5600. Cuts each having a width of 1 mm were formed by a cutter on the coating film so as to obtain 100 grids, a cellophane tape was attached so as to cover all the grids and was then immediately peeled away, and from the number of remaining grids which were still attached, the adhesion was evaluated. 100 grids remained to be attached among the 100 grids.

(Example 13)

A coating film on a stainless plate with the film (thickness of 148 μm) attached thereto was obtained in the same manner as in Example 11 except that the glass plate used as a base material is changed to the stainless plate (SUS304). A coating film adhesion test was carried out with respect to the coating film in the same manner as in Example 12, and 100 grids remained to be attached among the 100 grids.

(Comparative Example 5)

A coating film adhesion test was carried out with respect to the coating film on the glass plate obtained in Comparative Example 4 in the same manner as in Example 12, and 46 grids remained to be attached among the 100 grids.

As understood from the coating film adhesion tests in Examples 12 to 13 and Comparative Example 5, adhesion of the PAS fine particles obtained according to the present invention with respect to various base materials is satisfactory.

Industrial Applicability

The polyarylene sulfide powder particles coated with an anionic group-containing organic polymer compound and the dispersion including the particles according to the present invention have high dispersion stability, even if the polyarylene sulfide resin concentration is high, and excellent bondability and adhesion to various base materials such as plastics, metals, and glasses. Therefore, it is possible to appropriately use the polyarylene sulfide powder particles and the dispersion in the coating material field, the bonding material field, the coating field, the polymer compound field, or the like.

## Claims

**1.** A polyarylene sulfide dispersion comprising:

polyarylene sulfide particles;
an anionic group-containing organic polymer compound, wherein an acid value of the anionic group-containing organic polymer compound is from 10 to 300 mgKOH/g;
a base; and
an aqueous medium,
the polyarylene sulfide particles being coated with the anionic group-containing organic polymer compound.

**2.** The polyarylene sulfide dispersion according to claim 1,
wherein an anionic group of the anionic group-containing organic polymer compound is at least one anionic group selected from the group consisting of a carboxyl group, a carboxylate group, a sulfonic acid group, a sulfonate group, and a phosphoric acid group.

**3.** The polyarylene sulfide dispersion according to claim 1 or 2, wherein a main skeleton of the anionic group-containing organic polymer compound is at least one organic polymer compound selected from the group consisting of a (meth)acrylate resin, a (meth)acrylate-styrene resin, a (meth)acrylate-epoxy resin, a vinyl resin, a urethane resin, and a polyamideimide resin.

**4.** The polyarylene sulfide dispersion according to any one of claims 1 to 3, wherein in the anionic group-containing organic polymer compound, a base used for neutralization of the anionic group is at least one base selected from the group consisting of a metal hydroxide and an organic amine.

**5.** The polyarylene sulfide dispersion according to any one of claims 1 to 4, wherein a volume average particle size of the polyarylene sulfide particles in the polyarylene sulfide dispersion, as measured according to the description, is 1 μm or less.

**6.** Polyarylene sulfide powder particles obtained by drying the polyarylene sulfide dispersion according to any one of claims 1 to 5.

**7.** A method for producing a polyarylene sulfide dispersion comprising:

a step (A) of heating polyarylene sulfide in an organic solvent at a temperature of 150°C or higher, to obtain a solution;
a step (B) of adding the solution of polyarylene sulfide obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles;
a step (C) of reacting the polyarylene sulfide fine particles obtained in the step (B) with an acid to deposit the anionic group-containing organic polymer compound on the surface of the polyarylene sulfide fine particles and thereby precipitate the polyarylene sulfide particles coated with an anionic group-containing organic polymer;
a step (D) of filtering the polyarylene sulfide particles coated with the anionic group-containing organic polymer obtained in the step (C), followed by washing, to obtain a hydrous wet cake of the polyarylene sulfide particles coated with an anionic group-containing organic polymer; and
a step (E) of reacting the hydrous wet cake of the polyarylene sulfide particles coated with an anionic group-containing organic polymer obtained in the step (D) with a base to thereby obtain a dispersion including the polyarylene sulfide particles coated with an anionic group-containing organic polymer compound.

**8.** The method for producing a polyarylene sulfide dispersion according to claim 7, wherein the organic solvent used in the step (A) is at least one organic solvent selected from N-methyl-2-pyrrolidone, 1-chloronaphthalene, and 1,3-dimethyl-2-imidazolidinone.

**9.** A method for producing polyarylene sulfide powder particles comprising:

a step (A) of heating polyarylene sulfide in an organic solvent at a temperature of 150°C or higher, to obtain a solution;
a step (B) of adding the solution of polyarylene sulfide obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles;
a step (C) of reacting the polyarylene sulfide fine particles obtained in the step (B) with an acid to thereby deposit the anionic group-containing organic polymer compound on the surface of the polyarylene sulfide fine particles and precipitate the polyarylene sulfide particles coated with an anionic group-containing organic polymer;
a step (D) of filtering the polyarylene sulfide particles coated with the anionic group-containing organic polymer obtained in the step (C), followed by washing, to obtain a hydrous wet cake of polyarylene sulfide particles coated with an anionic group-containing organic polymer; and
a step (F1) of drying the hydrous wet cake of the polyarylene sulfide particles coated with the anionic group-containing organic polymer obtained in the step (D) to thereby obtain polyarylene sulfide powder particles coated with an anionic group-containing organic polymer.

**10.** A method for producing polyarylene sulfide powder particles, comprising:

a step (A) of heating polyarylene sulfide in an organic solvent at a temperature of 150°C or higher, to obtain a solution;
a step (B) of adding the solution of polyarylene sulfide solution obtained in the step (A) to a resin aqueous solution in which an anionic group-containing organic polymer compound, wherein an acid value of the anionic group-containing organic polymer compound is from 10 to 300 mgKOH/g, is added to water and dissolved, so as to form polyarylene sulfide fine particles;
a step (C) of reacting the polyarylene sulfide fine particles obtained in the step (B) with an acid to thereby deposit the anionic group-containing organic polymer compound on the surface of the polyarylene sulfide fine particles and precipitate the polyarylene sulfide particles coated with an anionic group-containing organic polymer;
a step (D) of filtering the polyarylene sulfide particles coated with the anionic group-containing organic polymer obtained in the step (C), followed by washing, to obtain a hydrous wet cake of polyarylene sulfide particles coated with an anionic group-containing organic polymer;
a step (E) of reacting the hydrous wet cake of polyarylene sulfide particles coated with the anionic group-containing organic polymer obtained in the step (D) with a base to thereby obtain a dispersion including the polyarylene sulfide particles coated with an anionic group-containing organic polymer compound; and
a step (F2) of drying the dispersion including the polyarylene sulfide particles coated with an anionic group-containing organic polymer compound obtained in the step (E) to thereby obtain polyarylene sulfide powder particles coated with an anionic group-containing organic polymer.

**11.** The method for producing polyarylene sulfide powder particles according to claim 9 or 10,
wherein the organic solvent used in the step (A) is at least one organic solvent selected from N-methyl-2-pyrrolidone, 1-chloronaphthalene, and 1,3-dimethyl-2-imidazolidinone.

**12.** The method for producing a polyarylene sulfide dispersion according to claim 7,
wherein, after the step (B), a dispersion liquid including the polyarylene sulfide obtained in the step (B) is mechanically pulverized.

**13.** The method for producing polyarylene sulfide powder particles according to claim 9 or 10,
wherein, after the step (B), a dispersion liquid including the polyarylene sulfide obtained in the step (B) is mechanically pulverized.

**Patentansprüche**

**1.** Polyarylensulfid-Dispersion, umfassend:

Polyarylensulfid-Teilchen;
eine anionische Gruppe-enthaltende organische Polymerverbindung, wobei ein Säurewert der anionische Gruppe-enthaltenden organischen Polymerverbindung 10 bis 300 mgKOH/g beträgt;
eine Base; und
ein wässriges Medium,
wobei die Polyarylensulfidteilchen mit der anionischen Gruppe-enthaltenden organischen Polymerverbindung beschichtet sind.

**2.** Die Polyarylensulfid-Dispersion nach Anspruch 1,
worin eine anionische Gruppe der eine anionische Gruppe-enthaltenden organischen Polymerverbindung zumindest eine anionische Gruppe ausgewählt aus der Gruppe bestehend aus einer Carboxylgruppe, einer Carboxylatgruppe, einer Sulfonsäuregruppe, einer Sulfonatgruppe und einer Phosphorsäuregruppe ist.

**3.** Die Polyarylensulfid-Dispersion nach Anspruch 1 oder 2,
worin ein Hauptgerüst der anionische Gruppe-enthaltenden organischen Polymerverbindung zumindest eine organische Polymerverbindung ausgewählt aus der Gruppe bestehend aus einem (Meth)acrylatharz, einem (Meth)acrylat-Styrolharz, einem (Meth)acrylat-Epoxyharz, einem Vinylharz, einem Urethanharz und einem Polyamidimidharz ist.

**4.** Die Polyarylensulfid-Dispersion nach einem der Ansprüche 1 bis 3,
worin in der anionische Gruppe-enthaltenden organischen Polymerverbindung eine zur Neutralisation der anionischen Gruppe verwendete Base zumindest eine Base ist, die aus der Gruppe ausgewählt ist, die aus einem Metallhydroxid und einem organischen Amin besteht.

**5.** Die Polyarylensulfid-Dispersion nach einem der Ansprüche 1 bis 4,
wobei eine volumengemittelte Teilchengröße der Polyarylensulfidteilchen in der Polyarylensulfid-Dispersion, gemessen gemäß der Beschreibung, 1 μm oder weniger beträgt.

**6.** Polyarylensulfidpulverteilchen, erhalten durch Trocknen der Polyarylensulfiddispersion nach einem der Ansprüche 1 bis 5.

**7.** Verfahren zur Herstellung einer Polyarylensulfid-Dispersion, umfassend:

einen Schritt (A) des Erwärmens von Polyarylensulfid in einem organischen Lösungsmittel bei einer Temperatur von 150°C oder höher, um eine Lösung zu erhalten;
einen Schritt (B) der Zugabe der in dem Schritt (A) erhaltenen Lösung von Polyarylensulfid zu einer wässrigen Harzlösung, in der eine anionische Gruppe-enthaltende organische Polymerverbindung, wobei ein Säurewert der anionische Gruppe-enthaltenden organischen Polymerverbindung 10 bis 300 mgKOH/g beträgt, zu Wasser zugegeben und gelöst ist, um Polyarylensulfidfeinteilchen zu bilden;
einen Schritt (C) des Reagierens der in dem Schritt (B) erhaltenen Polyarylensulfidfeinteilchen mit einer Säure, um die anionische Gruppe-enthaltende organische Polymerverbindung auf der Oberfläche der Polyarylensulfidfeinteilchen abzuscheiden und dadurch die mit einem anionische Gruppe-enthaltenden organischen Polymer beschichteten Polyarylensulfidteilchen auszufällen;
einen Schritt (D) des Filtrierens der in dem Schritt (C) erhaltenen Polyarylensulfidteilchen, die mit dem anionische Gruppe-enthaltenden organischen Polymer beschichtet sind, gefolgt von Waschen, um einen wasserhaltigen feuchten Kuchen der Polyarylensulfidteilchen zu erhalten, der mit einem anionische Gruppe-enthaltenden organischen Polymer beschichtet sind; und
einen Schritt (E) des Reagierens des in dem Schritt (D) erhaltenen wasserhaltigen feuchten Kuchens der Polyarylensulfidteilchen, die mit einem anionische Gruppe-enthaltenden organischen Polymer beschichtet sind, mit einer Base, um dadurch eine Dispersion zu erhalten, die die mit einer anionische Gruppe-enthaltenden organischen Polymerverbindung beschichteten Polyarylensulfidteilchen enthält.

**8.** Verfahren zur Herstellung einer Polyarylensulfid-Dispersion nach Anspruch 7,
worin das in dem Schritt (A) verwendete organische Lösungsmittel zumindest ein organisches Lösungsmittel ausgewählt aus N-Methyl-2-pyrrolidon, 1-Chlornaphthalin und 1,3-Dimethyl-2-imidazolidinon ist.

**9.** Verfahren zur Herstellung von Polyarylensulfidpulverteilchen, umfassend:

einen Schritt (A) des Erwärmens von Polyarylensulfid in einem organischen Lösungsmittel bei einer Temperatur von 150°C oder höher, um eine Lösung zu erhalten;
einen Schritt (B) der Zugabe der in dem Schritt (A) erhaltenen Lösung von Polyarylensulfid zu einer wässrigen Harzlösung, in der eine anionische Gruppe-enthaltende organische Polymerverbindung, wobei ein Säurewert der anionische Gruppe-enthaltenden organischen Polymerverbindung 10 bis 300 mgKOH/g beträgt, zu Wasser zugegeben und gelöst ist, um Polyarylensulfidfeinteilchen zu bilden;
einen Schritt (C) des Reagierens der in dem Schritt (B) erhaltenen Polyarylensulfidfeinteilchen mit einer Säure, um dadurch die anionische Gruppe-enthaltende organische Polymerverbindung auf der Oberfläche der Polyarylensulfidfeinteilchen abzuscheiden und die mit einem anionische Gruppe-enthaltenden organischen Polymer beschichteten Polyarylensulfidteilchen auszufällen;
einen Schritt (D) des Filtrierens der in dem Schritt (C) erhaltenen Polyarylensulfidteilchen, die mit dem anionische Gruppe-enthaltenden organischen Polymer beschichtet sind, gefolgt von Waschen, um einen wasserhaltigen feuchten Kuchen der Polyarylensulfidteilchen zu erhalten, die mit einem anionische Gruppe-enthaltenden organischen Polymer beschichtet sind; und
einen Schritt (F1) des Trocknens des in dem Schritt (D) erhaltenen wasserhaltigen feuchten Kuchens der Polyarylensulfidteilchen, die mit dem anionische Gruppe-enthaltenden organischen Polymer beschichtet sind, um dadurch Polyarylensulfidpulverteilchen zu erhalten, die mit einem anionische Gruppe-enthaltenden organischen Polymer beschichtet sind.

**10.** Verfahren zur Herstellung von Polyarylensulfidpulverteilchen, umfassend:

einen Schritt (A) des Erwärmens von Polyarylensulfid in einem organischen Lösungsmittel bei einer Temperatur

von 150°C oder höher, um eine Lösung zu erhalten;
einen Schritt (B) der Zugabe der in dem Schritt (A) erhaltenen Lösung von Polyarylensulfid zu einer wässrigen Harzlösung, in der eine anionische Gruppe-enthaltende organische Polymerverbindung, wobei ein Säurewert der anionische Gruppe-enthaltenden organischen Polymerverbindung 10 bis 300 mgKOH/g beträgt, zu Wasser zugegeben und gelöst wird, um Polyarylensulfidfeinteilchen zu bilden;
einen Schritt (C) des Reagierens der in dem Schritt (B) erhaltenen Polyarylensulfidfeinteilchen mit einer Säure, um dadurch die anionische Gruppe-enthaltende organische Polymerverbindung auf der Oberfläche der Polyarylensulfidfeinteilchen abzuscheiden und die mit einem anionische Gruppe-enthaltenden organischen Polymer beschichteten Polyarylensulfidteilchen auszufällen;
einen Schritt (D) des Filtrierens der in dem Schritt (C) erhaltenen Polyarylensulfidteilchen, die mit dem anionische Gruppe-enthaltenden organischen Polymer beschichtet sind, gefolgt von Waschen, um einen wasserhaltigen nassen Kuchen aus Polyarylensulfidteilchen zu erhalten, die mit einem anionische Gruppe-enthaltenden organischen Polymer beschichtet sind;
einen Schritt (E) des Reagierens des in dem Schritt (D) erhaltenen wasserhaltigen nassen Kuchens von Polyarylensulfidteilchen, die mit dem anionische Gruppe-enthaltenden organischen Polymer beschichtet sind, mit einer Base, um dadurch eine Dispersion zu erhalten, die die mit einer anionische Gruppe-enthaltenden organischen Polymerverbindung beschichteten Polyarylensulfidteilchen enthält; und
einen Schritt (F2) des Trocknens der in dem Schritt (E) erhaltenen Dispersion, die die Polyarylensulfidteilchen enthält, die mit einer anionische Gruppe-enthaltenden organischen Polymerverbindung beschichtet sind, um dadurch Polyarylensulfidpulverteilchen zu erhalten, die mit einem anionische Gruppe-enthaltenden organischen Polymer beschichtet sind.

**11.** Verfahren zur Herstellung von Polyarylensulfidpulverteilchen nach Anspruch 9 oder 10, worin das in dem Schritt (A) verwendete organische Lösungsmittel zumindest ein organisches Lösungsmittel ausgewählt aus N-Methyl-2-pyrrolidon, 1-Chlornaphthalin und 1,3-Dimethyl-2-imidazolidinon ist.

**12.** Verfahren zur Herstellung einer Polyarylensulfiddispersion nach Anspruch 7, wobei nach dem Schritt (B) eine Dispersionsflüssigkeit, die das in dem Schritt (B) erhaltene Polyarylensulfid enthält, mechanisch pulverisiert wird.

**13.** Verfahren zur Herstellung von Polyarylensulfidpulverteilchen nach Anspruch 9 oder 10, wobei nach dem Schritt (B) eine Dispersionsflüssigkeit, die das in dem Schritt (B) erhaltene Polyarylensulfid enthält, mechanisch pulverisiert wird.

## Revendications

**1.** Dispersion de polysulfure d'arylène comprenant :

des particules de polysulfure d'arylène ;
un composé polymère organique contenant un groupe anionique, où un indice d'acide du composé polymère organique contenant un groupe anionique est de 10 à 300 mg de KOH/g ;
une base ; et
un milieu aqueux,
les particules de polysulfure d'arylène étant revêtues du composé polymère organique contenant un groupe anionique.

**2.** Dispersion de polysulfure d'arylène selon la revendication 1, dans laquelle un groupe anionique du composé polymère organique contenant un groupe anionique est au moins un groupe anionique choisi dans le groupe constitué par un groupe carboxyle, un groupe carboxylate, un groupe acide sulfonique, un groupe sulfonate, et un groupe acide phosphorique.

**3.** Dispersion de polysulfure d'arylène selon la revendication 1 ou 2, dans laquelle un squelette principal du composé polymère organique contenant un groupe anionique est au moins un composé polymère organique choisi dans le groupe constitué par une résine (méth)acrylate, une résine (méth)acrylate-styrène, une résine (méth)acrylate-époxy, une résine vinylique, une résine uréthane, et une résine polyamideimide.

4. Dispersion de polysulfure d'arylène selon l'une quelconque des revendications 1 à 3, dans laquelle, dans le composé polymère organique contenant un groupe anionique, une base utilisée pour neutraliser le groupe anionique est au moins une base choisie dans le groupe constitué par un hydroxyde métallique et une amine organique.

5. Dispersion de polysulfure d'arylène selon l'une quelconque des revendications 1 à 4, dans laquelle une taille de particule moyenne en volume des particules de polysulfure d'arylène dans la dispersion de polysulfure d'arylène, mesurée selon la description, est de 1 μm ou moins.

6. Particules pulvérulentes de polysulfure d'arylène obtenues par séchage de la dispersion de polysulfure d'arylène selon l'une quelconque des revendications 1 à 5.

7. Procédé de production d'une dispersion de polysulfure d'arylène comprenant :

une étape (A) de chauffage de polysulfure d'arylène dans un solvant organique à une température de 150 °C ou plus, pour obtenir une solution ;
une étape (B) d'ajout de la solution de polysulfure d'arylène obtenue à l'étape (A) à une solution aqueuse de résine dans laquelle un composé polymère organique contenant un groupe anionique, où un indice d'acide du composé polymère organique contenant un groupe anionique est de 10 à 300 mg de KOH/g, est ajouté à de l'eau et dissous, de façon à former de fines particules de polysulfure d'arylène ;
une étape (C) de réaction des fines particules de polysulfure d'arylène obtenues à l'étape (B) avec un acide pour déposer le composé polymère organique contenant un groupe anionique sur la surface des fines particules de polysulfure d'arylène et précipiter ainsi les particules de polysulfure d'arylène revêtues d'un polymère organique contenant un groupe anionique ;
une étape (D) de filtration des particules de polysulfure d'arylène revêtues du polymère organique contenant un groupe anionique obtenues à l'étape (C), puis de lavage, pour obtenir un gâteau hydraté humide de particules de polysulfure d'arylène revêtues d'un polymère organique contenant un groupe anionique ; et
une étape (E) de réaction du gâteau hydraté humide de particules de polysulfure d'arylène revêtues d'un polymère organique contenant un groupe anionique obtenu à l'étape (D) avec une base pour obtenir ainsi une dispersion contenant les particules de polysulfure d'arylène revêtues d'un composé polymère organique contenant un groupe anionique.

8. Procédé de production d'une dispersion de polysulfure d'arylène selon la revendication 7, dans lequel le solvant organique utilisé à l'étape (A) est au moins un solvant organique choisi parmi la N-méthyl-2-pyrrolidone, le 1-chloronaphtalène, et la 1,3-diméthyl-2-imidazolidinone.

9. Procédé de production de particules pulvérulentes de polysulfure d'arylène comprenant :

une étape (A) de chauffage de polysulfure d'arylène dans un solvant organique à une température de 150 °C ou plus, pour obtenir une solution ;
une étape (B) d'ajout de la solution de polysulfure d'arylène obtenue à l'étape (A) à une solution aqueuse de résine dans laquelle un composé polymère organique contenant un groupe anionique, où un indice d'acide du composé polymère organique contenant un groupe anionique est de 10 à 300 mg de KOH/g, est ajouté à de l'eau et dissous, de façon à former de fines particules de polysulfure d'arylène ;
une étape (C) de réaction des fines particules de polysulfure d'arylène obtenues à l'étape (B) avec un acide pour déposer ainsi le composé polymère organique contenant un groupe anionique sur la surface des fines particules de polysulfure d'arylène et précipiter les particules de polysulfure d'arylène revêtues d'un polymère organique contenant un groupe anionique ;
une étape (D) de filtration des particules de polysulfure d'arylène revêtues du polymère organique contenant un groupe anionique obtenues à l'étape (C), puis de lavage, pour obtenir un gâteau hydraté humide de particules de polysulfure d'arylène revêtues d'un polymère organique contenant un groupe anionique ; et
une étape (F1) de séchage du gâteau hydraté humide de particules de polysulfure d'arylène revêtues du polymère organique contenant un groupe anionique obtenu à l'étape (D) pour obtenir ainsi des particules pulvérulentes de polysulfure d'arylène revêtues d'un polymère organique contenant un groupe anionique.

10. Procédé de production de particules pulvérulentes de polysulfure d'arylène comprenant :

une étape (A) de chauffage de polysulfure d'arylène dans un solvant organique à une température de 150 °C

ou plus, pour obtenir une solution ;
une étape (B) d'ajout de la solution de polysulfure d'arylène obtenue à l'étape (A) à une solution aqueuse de résine dans laquelle un composé polymère organique contenant un groupe anionique, où un indice d'acide du composé polymère organique contenant un groupe anionique est de 10 à 300 mg de KOH/g, est ajouté à de l'eau et dissous, de façon à former de fines particules de polysulfure d'arylène ;
une étape (C) de réaction des fines particules de polysulfure d'arylène obtenues à l'étape (B) avec un acide pour déposer ainsi le composé polymère organique contenant un groupe anionique sur la surface des fines particules de polysulfure d'arylène et précipiter les particules de polysulfure d'arylène revêtues d'un polymère organique contenant un groupe anionique ;
une étape (D) de filtration des particules de polysulfure d'arylène revêtues du polymère organique contenant un groupe anionique obtenues à l'étape (C), puis de lavage, pour obtenir un gâteau hydraté humide de particules de polysulfure d'arylène revêtues d'un polymère organique contenant un groupe anionique ;
une étape (E) de réaction du gâteau hydraté humide de particules de polysulfure d'arylène revêtues du polymère organique contenant un groupe anionique obtenu à l'étape (D) avec une base pour obtenir ainsi une dispersion contenant les particules de polysulfure d'arylène revêtues d'un composé polymère organique contenant un groupe anionique ; et
une étape (F2) de séchage de la dispersion contenant les particules de polysulfure d'arylène revêtues d'un composé polymère organique contenant un groupe anionique obtenue à l'étape (E) pour obtenir ainsi des particules pulvérulentes de polysulfure d'arylène revêtues d'un polymère organique contenant un groupe anionique.

**11.** Procédé de production de particules pulvérulentes de polysulfure d'arylène selon la revendication 9 ou 10, dans lequel le solvant organique utilisé à l'étape (A) est au moins un solvant organique choisi parmi la N-méthyl-2-pyrrolidone, le 1-chloronaphtalène, et la 1,3-diméthyl-2-imidazolidinone.

**12.** Procédé de production d'une dispersion de polysulfure d'arylène selon la revendication 7, dans lequel, après l'étape (B), un liquide de dispersion contenant le polysulfure d'arylène obtenu à l'étape (B) est pulvérisé mécaniquement.

**13.** Procédé de production de particules pulvérulentes de polysulfure d'arylène selon la revendication 9 ou 10, dans lequel, après l'étape (B), un liquide de dispersion contenant le polysulfure d'arylène obtenu à l'étape (B) est pulvérisé mécaniquement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009173878 A
- JP 2011122108 A
- JP 2012177010 A
- JP 7228699 A
- WO 2010058713 A